# EUROPÄISCHE PATENTSCHRIFT

(11) **EP 0 987 309 B1**
(45) Veröffentlichungstag und Bekanntmachung des Hinweises auf die Patenterteilung: **02.01.2004**
(21) Anmeldenummer: 99116890.7
(22) Anmeldetag: 06.09.1999
(51) Int. Cl.: C09J 7/00, C09J 7/02

(54) **Klebfolienstreifen**
Adhesive tape
Ruban adhésif

(30) Priorität: 19.09.1998 DE 19842865
(43) Veröffentlichungstag der Anmeldung: 22.03.2000
(73) Patentinhaber: Tesa AG, 20253 Hamburg (DE)
(72) Erfinder: Lühmann, Bernd, Dr., 22844 Norderstedt (DE); Krawinkel, Thorsten, Dr., 22457 Hamburg (DE)

(56) Entgegenhaltungen:
- EP-A- 0 845 515
- DE-A- 4 428 587

## Beschreibung

Die Erfindung betrifft einen Klebfolienstreifen für eine wiederlösbare Verklebung, der sich durch Ziehen in Richtung der Verklebungsebene aus einer Klebfuge herauslösen läßt.

Elastisch oder plastisch hochdehnbare Selbstklebebänder, welche sich durch Verstrecken im wesentlichen in der Verklebungsebene (durch sogenanntes Strippen) auch von z. T. sehr empfindlichen Verklebungsuntergründen, wie z. B. Papieren oder gestrichener Rauhfasertapete, rückstands- und zerstörungsfrei wiederablösen lassen, sind in US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729 und DE 197 08 366 beschrieben. Eingesetzt werden sie häufig in Form von Klebebandstreifen, welche einen bevorzugt nicht haftklebrigen Anfasserbereich aufweisen, von welchem aus der Ablöseprozeß eingeleitet wird. Besondere Applikationen und Ausführungsformen entsprechender Selbstklebebänder finden sich u. a. in DE 42 33 872, WO 94/21157, DE 44 28 587, DE 44 31 914, WO 97/07172, DE 196 49 636 und WO 98/03601.

Problematisch sind Reißer solcher stripfähiger Selbstklebebebänder, insbesondere im Bereich des vorzugsweise nicht haftklebrigen Anfassers bzw. im direkt an den bevorzugterweise nicht haftklebrigen Anfasserbereich angrenzenden Haftklebebereich sowie im Hauptbereich der Verklebung, mithin im Bereich zwischen Anfasser bzw. anfassernahem Haftklebebereich und dem Endbereich der Klebestreifen. DE 44 31 914 beschreibt eine sehr spezielle Maßnahme zur Reduzierung der Reißerneigung im Anfasserbereich: Erstaunlicherweise zeigt sich hier, daß durch Verwendung einer Abdeckung im Anfasserbereich, die auf der der Klebfolie zugewandten Seite abhäsiv ausgerüstet ist und die zugleich als Anfasser zum Ziehen dient, eine signifikante Reduzierung der Reißerneigung im Anfasserbereich erlangt wird. Es zeigt sich jedoch, daß mit dieser Maßnahme die Probleme nicht hinreichend und in allgemeiner Breite (d. h. auch für unterschiedliche Produktaufbauten) gelöst werden und zudem abhäsive, unerwünschte Produkte eingesetzt werden müssen.

Auch DE 44 28 587 C2 behandelt das Problem der Reißer bei derartigen Klebfolienstreifen, die jedoch in diesem Fall zum Ende des Lösungsprozesses auftreten (vgl. Sp. 1, Z. 30 - 32), und schlägt als Maßnahme dagegen vor, die Enden der Klebfolienstreifen besonders auszuformen, um zu erreichen, daß die Verklebungsfläche zu dem Ende des Klebfolienstreifens hin abnimmt, das in der Klebfuge verschwindet, während am anderen Ende gezogen werden kann. Als gut geeignet werden zum Beispiel, spitze, gezackte und konvex gekrümmte Stripenden oder auch Strips mit gewellter Endbegrenzung bezeichnet, (vgl. Sp. 1, z. 55 - 64). Auch derartige Klebfolienstreifen führen jedoch noch immer zu Reißern.

Aufgabe der Erfindung war es, hier Abhilfe zu schaffen, insbesondere Klebfolienstreifen der beschriebenen Art zu schaffen, bei denen keine oder annähernd keine Reißer beim Wiederlösen von damit vorgenommenen Verklebungen auftreten und bei denen das Wiederlösen zudem leichter und komfortabler als bisher möglich ist.

Gelöst wird diese Aufgabe durch einen Klebfolienstreifen, wie er näher in den Ansprüchen gekennzeichnet ist.

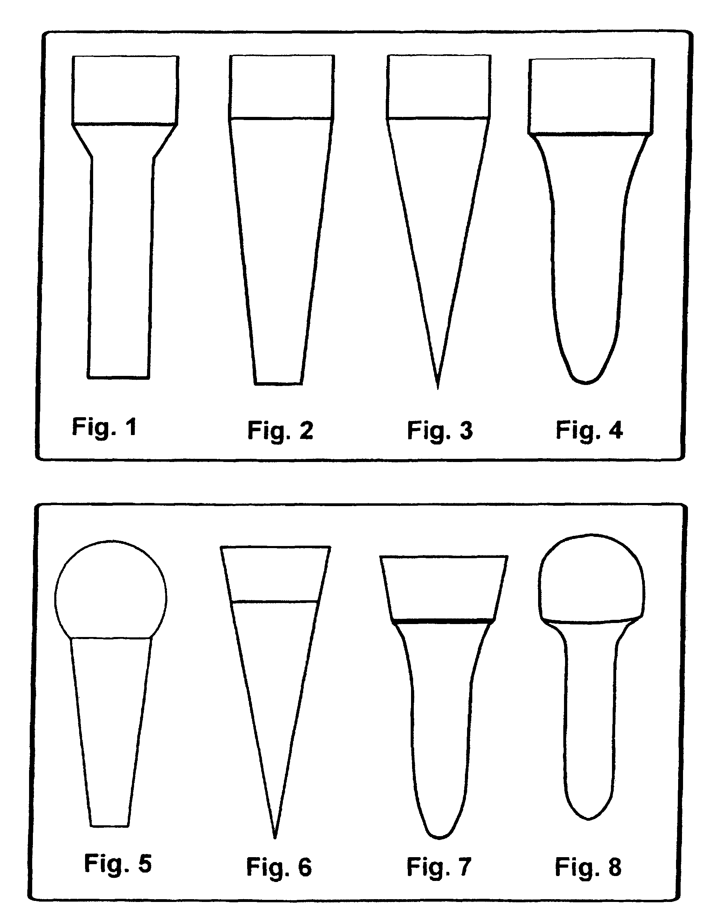

Das wesentliche Merkmal des erfindungsgemäßen Klebfolienstreifens liegt darin, daß nicht oder nicht nur sein in der Klebfuge verschwindendes Ende besonders ausgeformt ist, indem in diesem Bereich die Verklebungsfläche zum Ende hin abnimmt, sondern daß die Verklebungsfläche im vorderen Bereich des Klebfolienstreifens ("vorderen" deshalb, weil bei einer Verklebung sich dieser Bereich im vorderen Teil der Klebfuge befindet, im Gegensatz zum hinteren Bereich des Klebfolienstreifens, welcher in DE 44 28 587 angesprochen wird) also im Bereich des Anfassers zum diesem gegenüberliegenden Ende des Streifens hin, abnimmt. Mit anderen Worten: der Klebfolienstreifen ist mit einer besonders ausgestalteten Verklebungsfläche im Anfasserbereich (siehe z. B. Fig. 5 bis 7) und // oder im direkt an den Anfasserbereich angrenzenden Haftklebebereich (siehe z. B. Fig. 1 bis 8) versehen, im Gegensatz zu dem Ende-Bereich des Klebestreifens, der gemäß DE 44 28 587 ausgestaltet ist.

Die erfindungsgemäße Ausgestaltung führt nicht nur zu wesentlich weniger Reißern beim strippenden Lösen der Klebverbindung, sondern auch zu einem angenehmeren Verlauf dieses Strippens, insbesondere für Anwender mit geringer Kraft in den Händen und Armen, wie Frauen, Kinder und ältere Leute. So wird typischerweise ein Klebestreifen der durch Verstreckung in der Verklebungsebene abgelöst wird vom Anwender in den ersten Momenten des Ablöseprozesses recht vorsichtig und damit langsam aus der Klebfuge herausgestrippt. Wenn der herauszulösende Klebestreifen in seiner Breite konstant ist, so bleibt die aufzuwendende Kraft während des folgenden Ablöseprozesses näherungsweise konstant und der Klebestreifen wird über die verbleibende Länge mit etwa gleichmäßiger Geschwindigkeit aus der Klebfuge herausgelöst. Nimmt die Klebstreifenbreite jedoch ab, so wird die Kraft, die benötigt wird, um den Klebestreifen aus der Klebfuge herauszulösen, geringer. Für den Anwender ergibt sich durch die sich reduzierende Stripkraft und die simultan in der praktischen Anwendung zu beobachtende ansteigende Stripgeschwindigkeit die Empfindung eines sehr leichten und angenehmen Herauslösens der Klebestreifen aus der Klebfuge. Tatsächlich lassen sich auf diese Weise Klebestreifen realisieren, welche sich durch eine starke Abnahme der Klebestreifenbreite für den Anwender sozusagen "von selbst" abstrippen.

Eine Ursache für die verringerte Reißerneigung sich im Anfasserbereich bzw. an den Anfasserbereich angrenzenden Haftklebebereich verjüngender Klebestreifenabschnitte mag in der Tatsache begründet sein, daß im Bereich einer Klebestreifenverjüngung durch die Reduzierung der Stripkraft im Praxisfall eine Beschleunigung der Stripgeschwindigkeit durch die stetig abnehmende Stripkraft auftritt, welches zu einem gleichmäßigeren Herauslösen der Klebestreifen aus der Klebfuge führt und z. B. Verklebungen der Klebestreifen im verstreckten Zustand, wie sie beim langsamen Herauslösen der Klebestreifen auftreten können, nicht entsprechend in Erscheinung treten. Eine weitere Ursache mag darin begründet sein, daß die zuvor aus der Klebfuge herausgelösten Klebestreifenbereiche durch ihre größere Klebestreifenbreite beim weiteren Abstrippen unter einer geringeren Spannung stehen und somit in diesen Bereichen die Wahrscheinlichkeit von Reißern verringert ist, welches insgesamt eine Reduzierung der Reißerneigung beim Ablöseprozeß bewirkt.

Erstaunlicherweise zeigt sich somit, daß mit der oben genannten Maßnahme einfache geometrische Formen eines Klebfolienstreifens möglich werden, welche ein komfortableres Strippen ermöglichen und welche zudem eine signifikante Reduzierung der Reißerneigung ermöglichen. Entsprechende Maßnahmen können für den Anfasserbereich in Kombination mit denen aus DE 44 31 914 und/oder DE 44 28 587 oder auch allein eingesetzt werden. So wird eine deutliche Reduzierung der Reißerneigung durch Integration solcher Klebebandbereiche erreicht, in denen sich der Klebestreifen stetig verjüngt.

Erfindungsgemäße Klebfolienstreifen können von ein- oder mehrschichtigem Aufbau sein. Prinzipiell geeignet sind einschichtige Klebebänder entsprechend DE 33 31 016 und DE 42 22 849 oder mehrschichtige Klebebänder bestehend aus einer oder aus mehreren Klebstoffschichten sowie aus einer oder aus mehreren folienoder schaumstoffhaltigen Schichten entsprechend US 4,024,312, DE 195 31 696, DE 196 26 870, DE 197 08 366, DE 196 49 727, DE 196 49 728, DE 196 49 729 oder auch solche entsprechend WO 92/11332, WO 92/1333 und WO 95/06691.

Schaumstoffzwischenträger können u. a. vorteilhaft dann Teil erfindungsgemäßer Klebfolienstreifen sein, wenn z. B. solche mit höherer Biegesteifigkeit eingesetzt werden sollen. Erfindungsgemäß einsetzbar sind sowohl einseitig, als auch beidseitig haftklebrige Klebfolienstreifen, bevorzugt sind die beidseitig haftklebrigen.

Erfindungsgemäße Klebfolienstreifen liegen in ihrer Breite bevorzugt unter etwa 30 mm, Typische Klebestreifenlängen betragen zwischen ca. 20 mm und 100 mm, bevorzugt zwischen ca. 25 mm und 75 mm, besonders bevorzugt zwischen ca. 30 mm und 60 mm. Klebestreifen können im Endbereich optional entsprechend DE 44 28 587 ausgeformt sein, z. B. spitz zulaufen. Klebfolienstreifen weisen typische Dicken zwischen ca. 300 µm und ca. 2500 µm auf, bevorzugt zwischen 400 µm und 1500 µm. Enthalten die Klebfolienstreifen einen oder mehrere schaumstoffhaltige Schichten, so betragen typische Klebfolienstreifendicken ca. 300 µm bis ca. 5000 µm, bevorzugt ca. 400 µm bis ca. 3000 µm, besonders bevorzugt ca. 500 µm bis ca. 2000 µm.

Erfindungsgemäße Klebfolienstreifen mit in einem oder mehreren begrenzten Bereichen sich stetig reduzierender Klebstreifenbreite sowie Klebestreifen mit sich über den gesamten Verklebungsbereich bzw. über die gesamte Klebestreifenlänge stetig reduzierender Klebfolienstreifenbreite weisen auf halber Klebfolienstreifenlänge eine Klebfolienstreifenbreite von ≤ ca. 90 % der Breite des Klebfolienstreifens am Übergang zwischen Haftklebebereich und Anfasser, bevorzugt von ≤ ca. 75 % der Breite des Klebfolienstreifens am Übergang zwischen Haftklebebereich und Anfasser auf.

Typische Anwendungen zuvor beschriebener Klebfolienstreifen sind die Fixierung leichter bis mittelschwerer Gegenstände, wie z. B. Bilder, Kalender, Poster, Dekorationen, Hinweisschilder, Postkarten, selbstklebende Befestigungsvorrichtungen, wie z. B. selbstklebende Haken, selbstklebende Bilderhalter etc. im Wohn- und Bürobereich. In einer speziellen Ausführung werden die nicht haftklebrigen Anfasserbereiche entsprechender Klebestreifen durch farbige Bedruckung oder Beschichtung mit farbigen Folien oder Papieren erzeugt. Vorteil ist hierbei, daß durch die farbige Ausgestaltung der Anfasserbereiche die Anfasser selbst gut sichtbar bleiben. Ein weiterer Vorteil ist ein attraktiveres Erscheinungsbild entsprechender Klebestreifen, z. B. für Kinder. In einer weiteren speziellen Ausführung sind die Klebestreifen im Verklebungsbereich im Mittel zwischen ca. 2 mm und ca. 5 mm breit und zwischen ca. 20 mm und ca. 40 mm lang, wodurch sich Klebestreifen erhalten lassen, welche sich insbesondere für die Verklebung kleinster und sehr leichter Gegenstände, wie sie z. B. typischerweise an Pin-Wänden fixiert werden, erhalten lassen.

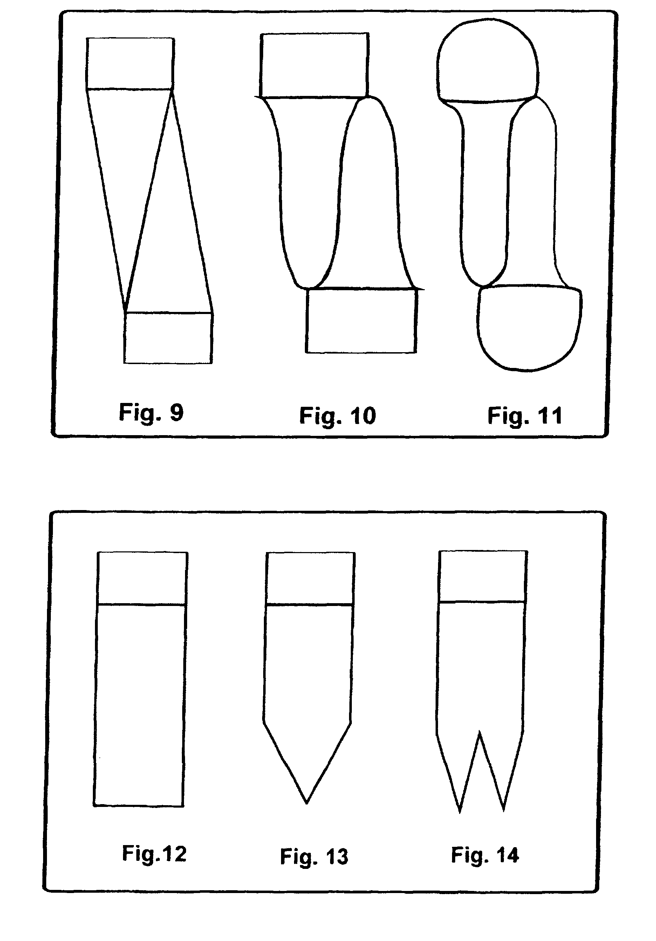

Besonders bevorzugt sind Klebfolienstreifenformen, welche sich entsprechend DE 196 41 094 weitestgehend verlustfrei stanzen lassen. Ausgewählte Beispiele entsprechender Formen sind in den Figuren 9, 10 und 11 dargestellt. Vorgenannte Beispiele verstehen sich als beispielhaft aus einer großen Menge möglicher Formen herausgegriffen.

Typische Darreichungsformen umfassen einseitig mit einem Trennlaminat (typischerweise Trennpapier oder Trennfolie) abgedeckte Klebebandstreifenstanzlinge, welche mit ihrer zweiten haftklebrigen Seite ähnlich etwa haftklebrigen Etiketten auf Trennpapier- bzw. Trennfolienrollenware vorliegen und z. B. einer Schachtelverpackung mit Schlitz und optional vorhandener Abreißvorrichtung entnommen werden können, oder auch solche, welche auf Trennpapier- bzw. Trennfolienblattware vorliegen. Eine bevorzugte Verpackung ist die eines Heftchens, welches mehrere Trennpapier- bzw. Trennfolienblätter enthält, die mit erfindungsgemäßen Klebestreifen bestückt sind. Weitere Möglichkeiten umfassen u. a. Schachteln oder Dosen, welche beidseitig mit einem Trennpapier oder einer Trennfolie abgedeckte Klebebandstreifen enthalten. Vorgenannte Beschreibungen verstehen sich als beispielhaft aus einer großen Menge möglicher Darreichungsformen herausgegriffen.

In den Figuren 1 - 1 sind beispielhafte Ausgestaltungen dargestellt, die Figuren 12 bis 14 betreffen den Stand der Technik.

### Beispiel I

40 Teile eines polyisoprenmodifizierten Styrol-Ethylen/Butylen-Styrol Blockcopolymers (Kraton G RP 6919; Shell), 60 Teile eines hydrierten Kohlenwasserstoffharzes (Regalite R 101; Hercules) und 1 Teil eines primären Antioxidantes (Irganox 1010; Ciba) werden in einem Kneter mit Sigma-Schaufel bei einer Temperatur von +180°C zu einer homogenen Mischung verarbeitet. Nach dem Erkalten werden durch Verpressen der Klebmasse bei +200°C einschichtige Klebstoff-Folienstücke von 800 ± 60 µm Dicke hergestellt.

Mittels einer Stanze werden aus den Klebstoff-Folienstücken rechteckige Klebestreifen der Abmessungen 20 mm x 50 mm und 10 mm x 50 mm (jeweils Breite x Länge) erhalten, welche an einem Längsende beidseitig mit einem Anfasser bestehend aus 14 mm langen und 25 µm dicken, der Breite der Klebestreifen angepaßten Polyesterfolien (Hostaphan RN 25; Hoechst) abgedeckt werden. Ein Teil der 20 mm breiten Klebstoff-Folienstücke wird am Ende entsprechend der Figuren 13 und 14 spitz ausgeformt. Mit je einem Klebestreifen werden je zwei rechteckige Glasplatten der Abmessungen 100 mm x 50 mm an einer ihrer kurzen Seiten mittig derart deckungsgleich verklebt, daß der nicht haftklebrige Anfasserbereich etwa 12 mm aus der Klebfuge hervorsteht. Die Klebestreifen werden anschließend durch Verstrecken in der Verklebungsebene manuell aus der Klebfuge herausgelöst. Analog hergestellt und untersucht werden Klebestreifen entsprechend Figur 1 (Anfasser: 20 mm breit, 12 mm lang, beidseitig mit 25 µm dicker Polyesterfolie abgedeckt; Haftklebebereich: 38 mm lang, Verjüngung der Klebstreifenbreite direkt anschließend an den nicht haftklebrigen Anfasserbereich über eine Länge von 5 mm auf eine konstante Endbreite von 10 mm), entsprechend Figur 3 (Anfasser: 20 mm breit, 12 mm lang, beidseitig mit 25 µm dicker Polyesterfolie abgedeckt; Haftklebebereich: 38 mm lang, Verjüngung der Klebstreifenbreite direkt anschließend an den nicht haftklebrigen Anfasserbereich auf 0 mm Endbreite) und entsprechend Figur 4 (Anfasser: 20 mm breit, 12 mm lang, beidseitig mit 25 µm dicker Polyesterfolie abgedeckt; Haftklebebereich mittig 12 mm breit). Je Klebestreifen wurden 10 Versuche durchgeführt. Es ergeben sich nachfolgende Versuchsergebnisse:

| Versuch | Klebestreifenbreite | Klebestreifenform | Anzahl Reißer im Anfasserbereich |
|---|---|---|---|
| 1-01 | 20 mm | entsprechend Fig. 12 | 6 von 10 |
| 1-02 | 20 mm | entsprechend Fig. 13 | 5 von 10 |
| 1-03 | 20 mm | entsprechend Fig. 14 | 7 von 10 |
| 1-01a | 10 mm | entsprechend Fig. 12 | 5 von 10 |
| Versuch | Klebstreifenform | | Anzahl Reißer im Anfasserbereich |
| 1-04 | entsprechend Fig. 1; Maße siehe Text | | 1 |
| 1-05 | entsprechend Fig. 3; Maße siehe Text | | 0 |
| 1-06 | entsprechend Fig. 4; Maße siehe Text | | 0 |

Die Ausformung zum Ende des Klebestreifens hat keine Auswirkung auf die Reißerneigung im Anfasserbereich. Im Breitenbereich zwischen 10 mm und 20 mm zeigt sich keine signifikante Reduzierung der Reißerneigung bei Klebestreifenformen entsprechend Fig. 12. Durch die Verjüngung im direkt an den Anfasserbereich anschließenden Verklebungsbereich wird eine signifikante Reduzierung bzw. vollständige Eliminierung der Anzahl der Reißer erreicht.

### Beispiel II

Aus Klebstoff-Folienstücken entsprechend Beispiel I werden durch Ausstanzen Klebestreifen der Abmessungen 50 mm x 20 mm (Länge x maximale Breite) mit sich stetig verjüngender Klebstreifenbreite entsprechend der Figuren 2, 3, 4 und 6 erhalten und im Vgl. zur Form der Figur 12 und 13 untersucht. Die Ausprüfung erfolgt entsprechend Beispiel II. Zusätzlich wird qualitativ das Handling des Ablöseprozesses beurteilt.

| Versuch | Klebstreifenform entsprechend | Reißer | Qualitative Beurteilung des Ablöseverhaltens |
|---|---|---|---|
| 2-01 | Figur 12 | 6 von 10 | schwer |
| 2-02 | Figur 13 | 7 von 10 | bis zur Verjüngung schwer |
| 2-03 | Figur 2 | 2 von 10 | angenehmer als Versuch 6-01 |
| 2-04 | Figur 3 | 1 von 10 | sehr angenehm |
| 2-05 | Figur 4 | 0 von 10 | sehr angenehm |
| 2-06 | Figur 6 | 0 con 10 | sehr angenehm |

Durch die sich stetig verjüngende Klebfolienstreifenbreite wird die Reißerneigung signifikant reduziert oder sogar vollständig eliminiert. In der qualitativen Beurteilung des Ablöseverhaltens werden Klebestreifen mit sich stetig verjüngender Klebstreifenbreite als sehr angenehm empfunden.

### Beispiel III

40 Tle Kraton G RP 6909, 10 Tle Kraton G 1650 (Styrol-Isopren-Styrol Dreiblockpolymer; Shell), 50 Tle Regalite R 101 und 1 Tl. Irganox 1010 werden entsprechend Beispiel I zu einer homogenen Haftklebemasse verarbeitet, aus der anschließend Klebstoff-Folien von 750 ± 50 µm gefertigt werden. Aus den erhaltenen Klebstoff-Folienstücken werden entsprechend Beispiel I durch Ausstanzen Klebestreifen entsprechend Fig. 1, 2, 4, 6 und 12 hergestellt. Sämtliche Klebestreifen weisen eine Gesamtlänge von 45 mm auf, die Anfasser eine Länge von 14 mm. Zusätzlich werden Klebestreifen entsprechend Fig. 8 (Versuch 4-11) hergestellt. Letztere weisen eine Anfasserlänge und -breite von 7 mm auf. Die Gesamtlänge beträgt 35 mm. Prüfmuster wurden entsprechend Beispiel. I präpariert und beurteilt. Es ergeben sich nachfolgende Versuchsergebnisse:

| Versuch | Klebstreifenform Entsprechend | Klebstreifenbreite in Klebstreifenmitte** | Anzahl Reißer |
|---|---|---|---|
| 3-01 | Fig. 1 | 8 mm | 0 von 10 |
| 3-02 | Fig. 2 | 10 mm | 0 von 10 |
| 3-03 | Fig. 4 | 9 mm | 0 von 10 |
| 3-04 | Fig. 6 | 7,5 mm | 0 von 10 |
| 3-05 | Fig. 12 | 15 mm | 3 von 10* |
| 3-11 | Fig. 8 | 3,5 mm | 0 von 10 |

| | | | |
|---|---|---|---|
| * 1 Reißer im Anfasserbereich, 2 Reißer am Klebestreifenende | | | |
| ** Fig. 1, 2, 4, 8: Breite in der Mitte der Klebfläche; Fig. 6: Breite in der Mitte des Klebestreifens | | | |

| Versuch | Qualitative Beurteilung des Ablöseverhaltens |
|---|---|
| 3-01 | angenehm bis sehr angenehm |
| 3-02 | angenehm bis sehr angenehm |
| 3-03 | sehr angenehm |
| 3-04 | sehr angenehm |
| 3-05 | weniger angenehm als Versuch 3-01, 3-02 und 3-05 |
| 3-11 | sehr angenehm |

Sämtliche sich im an den Anfasserbereich anschließenden Verklebungsbereich verjüngenden Klebestreifen lassen sich reißerfrei ablösen. Das Ablöseverhalten der Versuche 3-01 bis 3-04 mit sich verjüngenden Klebebändern wurde im Ggs. zu Versuch 3-06 als angenehm bis sehr angenehm bzw. als sehr angenehm beurteilt.

### Beispiel IV

Bei Klebestreifen entsprechend Versuch 3-11 werden die Polyesterfolienanfasser durch kreisrunde farbige Papieranfasser von 7 mm Durchmesser ersetzt. Entsprechende Klebestreifen eignen sich insbesondere für die Verklebung kleiner und sehr leichter flacher Gegenstände, z. B. an Pin-Wänden. Durch die farbige Ausgestaltung der Anfasserbereiche läßt sich deren Position sehr schnell erkennen und somit leicht wiederfinden. Insbesondere geeignet sind für ein schnelles Erkennen Anfasserbereiche, welche mittels fluoreszierender Leuchtfarben bedruckt sind.

## Patentansprüche

1. Klebfolienstreifen für eine wiederlösbare Verklebung, der sich durch Ziehen in Richtung der Verklebungsebene aus einer Klebfuge herauslösen lässt, **dadurch gekennzeichnet, dass** die Verklebungsfläche im Anfasser oder im direkt an den Anfasser angrenzenden Haftklebebereich abnimmt und dass die Klebefläche vom Anfasser hin zum gegenüberliegenden Ende des Kleberstreifens abnimmt.

2. Klebfolienstreifen nach Anspruch 1, **dadurch gekennzeichnet, dass** die Klebestreifenbreite auf halber Länge zwischen Anfasser und Klebestreifenende weniger als 90 %, bevorzugt weniger als 75 % der Breite beträgt, die der Anfasser am zum Haftklebebereich angrenzenden Ende aufweist.

3. Klebfolienstreifen an Anspruch 1, **dadurch gekennzeichnet, dass** die Verklebungsfläche auch im Bereich des Endes abnimmt, welches dem Anfasser gegenüber liegt.

4. Klebfolienstreifen nach Anspruch 1, **dadurch gekennzeichnet, dass** die Verklebungsfläche über die gesamte Länge bis zu dem Ende abnimmt, welches dem Anfasser gegenüber liegt.

5. Klebfolienstreifen nach Anspruch 2, **dadurch gekennzeichnet, dass** die Verklebungsfläche abnimmt, indem das Streifenende spitz, gezackt, konvex gekrümmt oder wellenförmig. begrenzt ausläuft oder zum Streifenende hin zunehmend die Klebfolienoberfläche mittels einer Abdeckung oder eines Aufdrucks inertisiert ist.

6. Klebfolienstreifen nach Anspruch 1, **dadurch gekennzeichnet, dass** der Streifen eine oder mehrere schaumstoffhaltige Schichten enthält.

7. Klebfolienstreifen nach Anspruch 1, **dadurch gekennzeichnet, dass** der Klebfolienstreifen ein solcher auf Basis von thermoplastischem Kautschuk und klebrigmachenden Harzen ist, wobei die Klebefolie hohe Elastizität und geringe Plastizität aufweist und wobei die Adhäsion geringer als die Kohäsion ist, das Haftvermögen beim Dehnen der Folie weitgehend verschwindet und das Verhältnis von Abzugskraft zu Reißlast mindestens 1 1,5 ist, wobei die Masse selbstklebend oder wärmeaktivierbar eingestellt ist.

8. Klebfolienstreifen nach Anspruch 1, **dadurch gekennzeichnet, dass** das Ende, welches als Anfasser zum Ziehen dient, mit einer Abdeckung versehen ist, insbesondere UV-undurchlässig ist.

9. Klebfolienstreifen nach Anspruch 8, **dadurch gekennzeichnet, dass** die Abdeckung eine dimensionsstabile und insbesondere beidseitig auf die Klebfolie aufkaschierte Kunststoff-Folie ist.

10. Klebfolienstreifen nach Anspruch 1, **dadurch gekennzeichnet, dass** der Klebfolienstreifen ein solcher mit einer hochdehnbaren, praktisch nicht rückstellenden Trägerfolie und einer druckempfindlichen Selbstklebemasse auf beiden Seiten der Trägerfolie ist, wobei die Trägerfolie eine genügend hohe Bruchdehnung (tensile strength at break) hat, so dass sie nicht reißt, bevor der Klebfolienstreifen vom Substrat abgezogen ist.

## Claims

1. Adhesive tape strip for a rereleasable adhesive bond, which can be removed from a bonded joint by pulling in the direction of the bond plane, **characterized in that** the bonding area decreases in the grip tab or in the pressure-sensitive adhesive region directly bordering the grip tab and **in that** the bonding area decreases from the grip tab to the opposite end of the adhesive strip.

2. Adhesive tape strip according to Claim 1, **characterized in that** the adhesive strip width mid-way between the grip tab and the end of the adhesive strip is less than 90%, preferably less than 75%, of the width of the grip tab at the end bordering the pressure-sensitive adhesive region.

3. Adhesive tape strip at [sic] Claim 1, **characterized in that** the bonding area also decreases in the region of the end opposite the grip tab.

4. Adhesive tape strip according to Claim 1, **characterized in that** the bonding area decreases over the entire length up to the end opposite the grip tab.

5. Adhesive tape strip according to Claim 2, **characterized in that** the bonding area decreases by the end of the strip running to a defined point, zigzag, convex curvature or corrugation or by the adhesive tape surface, toward the end of the strip, being rendered inert by means of a cover or an imprint.

6. Adhesive tape strip according to Claim 1, **characterized in that** the strip comprises one or more foam-comprising layers.

7. Adhesive tape strip according to Claim 1, **characterized in that** it is based on thermoplastic rubber and tackifying resins, the adhesive tape having high elasticity and low plasticity and the adhesion being less than the cohesion, the adhesiveness largely disappearing when the tape is extended, and the ratio of peel force to tensile strength being at least 1:1.5, and the composition being formulated to be self-adhesive or heat-activatable.

8. Adhesive tape strip according to Claim 1, **characterized in that** the end which serves as a grip tab for pulling is provided with a cover and, in particular, is UV-impermeable.

9. Adhesive tape strip according to Claim 8, **characterized in that** the cover is a dimensionally stable polymer film which in particular is laminated onto both sides of the adhesive tape.

10. Adhesive tape strip according to Claim 1, **characterized in that** it has a highly extensible, virtually non-resilent backing film and a pressure-sensitive self-adhesive composition on both sides of the backing film, the backing film having a sufficiently high elongation at break (tensile strength at break) that it does not tear before the adhesive tape strip has been peeled from the substrate.

## Revendications

1. Ruban adhésif permettant un collage libérable, qui peut être enlevé d'un joint de collage par traction dans la direction du plan de collage, **caractérisé en ce que** la surface adhésive diminue au droit de la patte de saisie ou dans la zone adhésive directement adjacente à la patte de saisie et **en ce que** la surface adhésive diminue depuis la patte de saisie jusqu'à l'extrémité opposée du ruban adhésif.

2. Ruban adhésif selon la revendication 1, **caractérisé en ce que** la largeur du ruban adhésif au milieu de la longueur entre la patte de saisie et l'extrémité du ruban adhésif représente moins de 90% et de préférence moins de 75% de la largeur que présente la patte de saisie à son extrémité adjacente à la zone adhésive.

3. Ruban adhésif selon la revendication 1, **caractérisé en ce que** la surface adhésive diminue également dans la zone de l'extrémité opposée à la patte de saisie.

4. Ruban adhésif selon la revendication 1, **caractérisé en ce que** la surface adhésive diminue sur toute la longueur jusqu'à l'extrémité opposée à la patte de saisie.

5. Ruban adhésif selon la revendication 2, **caractérisé en ce que** la surface adhésive diminue par le fait que l'extrémité du ruban s'étend en pointe, en dents de scie, en courbe convexe ou en extrémité ondulée ou **en ce que** la surface du ruban adhésif est rendue inerte au moyen d'un recouvrement ou d'une impression, et ce de manière croissante en direction de l'extrémité du ruban.

6. Ruban adhésif selon la revendication 1, **caractérisé en ce que** le ruban contient une ou plusieurs couches contenant de la mousse.

7. Ruban adhésif selon la revendication 1, **caractérisé en ce que** le ruban adhésif est un ruban à base de caoutchouc thermoplastique et de résine adhésive, la feuille adhésive présentant une élasticité élevée et une faible plasticité, l'adhérence étant inférieure à la cohésion, le pouvoir adhésif disparaissant largement en cas d'extension de la feuille et le rapport entre la force de traction et la charge de déchirure étant au moins de 1 : 1,5, la pâte étant ajustée de manière à être autocollante ou apte à être activée à la chaleur.

8. Ruban adhésif selon la revendication 1, **caractérisé en ce que** l'extrémité qui sert de patte de saisie pour la traction est dotée d'un recouvrement et en particulier d'un recouvrement imperméable aux UV.

9. Ruban adhésif selon la revendication 8, **caractérisé en ce que** le recouvrement est une feuille de matière synthétique de dimensions stables et en particulier appliquée sur les deux côtés de la feuille adhésive.

10. Ruban adhésif selon la revendication 1, **caractérisé en ce que** le ruban adhésif est un ruban adhésif doté d'une feuille de support fortement extensible et pratiquement sans recul, et d'une pâte autocollante sensible à la pression sur les deux côtés de la feuille de support, la feuille de support présentant un allongement à la rupture ("tensile strength at break" - résistance à la rupture en traction) suffisamment élevé pour ne pas se déchirer avant que le ruban adhésif ait été enlevé du substrat.
